(19) Europäisches Patentamt
European Patent Office
Office européen des brevets

(11) EP 1 732 960 B1

(12) **FASCICULE DE BREVET EUROPEEN**

(45) Date de publication et mention de la délivrance du brevet:
**05.12.2018 Bulletin 2018/49**

(21) Numéro de dépôt: **05739721.8**

(22) Date de dépôt: **29.03.2005**

(51) Int Cl.:
***C08F 220/60*** *(2006.01)*

(86) Numéro de dépôt international:
**PCT/FR2005/050196**

(87) Numéro de publication internationale:
**WO 2005/100423 (27.10.2005 Gazette 2005/43)**

(54) **NOUVEAUX POLYMERES AMPHOTERES ASSOCIATIFS DE HAUT POIDS MOLECULAIRE ET LEURS APPLICATIONS**

NEUE AMPHOTERE ASSOZIATIVPOLYMERE MIT HOHEM MOLEKULARGEWICHT UND DErEN VERWENDUNG

NOVEL HIGH MOLECULAR WEIGHT ASSOCIATIVE AMPHOTERIC POLYMERS AND USES THEREOF

(84) Etats contractants désignés:
**AT BE BG CH CY CZ DE DK EE ES FI FR GB GR HU IE IS IT LI LT LU MC NL PL PT RO SE SI SK TR**

(30) Priorité: **07.04.2004 FR 0450701**

(43) Date de publication de la demande:
**20.12.2006 Bulletin 2006/51**

(73) Titulaire: **S.P.C.M. SA**
**42160 Andrézieux Bouthéon (FR)**

(72) Inventeurs:
- **GAILLARD, Nicolas**
**F-69630 CHAPONOST (FR)**
- **FAVERO, Cédrick**
**F-69700 GIVORS (FR)**

(74) Mandataire: **Cabinet Laurent & Charras**
**Le Contemporain**
**50 Chemin de la Bruyère**
**69574 Dardilly Cedex (FR)**

(56) Documents cités:
**US-A- 5 071 934**
**US-A- 5 879 670**
**US-B1- 6 329 483**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 732 960 B1

## Description

La présente invention concerne de nouveaux polymères amphotères associatifs destinés à augmenter la viscosité des solutions aqueuses, ainsi que les compositions aqueuses contenant ces polymères.

Par définition, on dira qu'un polymère est viscosifiant lorsqu'il augmente la viscosité des solutions dans lesquelles il est dissous.

Parmi les polymères viscosifiants de solutions aqueuses appartenant à l'état de la technique, les polymères synthétiques tels que les poly(meth)acrylamides, éventuellement partiellement hydrolysés, et les poly(meth)acrylates et leurs copolymères sont particulièrement connus. Ces polymères développent une viscosité grâce à leur masse molaire et aux répulsions ioniques interchaînes. Le mécanisme régissant la viscosité est lié à une hausse du volume hydrodynamique et à des répulsions interchaînes.

Cependant, en présence d'électrolytes, de tensioactifs ou d'une température d'utilisation élevée, ces polymères ne développent pas de bonnes propriétés épaississantes, ce qui se traduit par une diminution forte de leur pouvoir viscosifiant.

Afin d'améliorer les performances des polymères synthétiques précédemment cités, ceux ci ont été modifiés par introduction de groupements hydrophobes. Les polymères ainsi obtenus (comportant minoritairement des motifs apolaires et de façon majoritaire des motifs à caractère hydrophile) sont appelés « associatifs ». Ils nécessitent une masse moléculaire élevée et se caractérisent par le fait que lors de leurs mises en solutions, leurs groupements hydrophobes s'associent afin de limiter les interactions avec l'eau. La chute de viscosité liée à la présence d'électrolytes, de tensioactifs ou de températures élevées, source de baisse du volume hydrodynamique, est compensée par les interactions attractives interchaînes.

Les polymères associatifs acryliques les plus répandus se présentent dans leur immense majorité, sous la forme d'une émulsion (dans l'eau ou inverse ou d'une dispersion aqueuse). Il est à noter que la polymérisation en émulsion inverse est une méthode de choix bien connue de l'homme du métier. Elle permet en particulier d'obtenir des polymères acryliques de haut poids moléculaire et peut contenir une concentration raisonnablement élevée de polymère tout en restant fluide. De plus, la forte surface spécifique de la phase dispersée du polymère rend la solubilisation ou le gonflement du polymère très rapide.

Les monomères hydrophobes utilisés pour la préparation de ces polymères peuvent être de 2 types : non-ioniques et/ou ioniques.

Parmi les monomères hydrophobes non-ioniques, on peut citer :

- les esters d'acide (meth)acrylique à chaîne alkyle ou ethoxylée disponibles industriellement,
- et les dérivés d'acrylamide à chaîne alkyle ou dialkyle qui nécessitent, afin de pouvoir les co-polymériser, une mise en oeuvre difficile n'ayant connu aucun développement industriel à ce jour.

Parallèlement, l'utilisation de monomères hydrophobes ioniques a également été décrite. Il s'agit essentiellement :

- de dérivés allyliques cationiques, qui présentent une très mauvaise réactivité générant des dérives de composition, néfastes aux applications visées car formant des chaînes insolubles.
- ou de dérivés d'acryloyle hydrophobes ioniques (anioniques ou cationiques), ces derniers étant cités comme monomères potentiels mais très rarement exemplifiés et jamais décrits sous la forme d'une poudre.

A l'occasion de recherches sur la préparation de nouveaux polymères amphotères permettant de viscosifier des compositions aqueuses, quelle que soit leur salinité, leur teneur en tensioactif ou leur température, la demanderesse s'est intéressée aux polymères associatifs amphotères.

On connaît dans l'art antérieur :

- Le brevet US 5071934 concernant la préparation de polymères cationiques associatifs, pouvant être interprétés comme amphotères dans les cas extrêmes, obtenus en émulsion. Aucun exemple n'est donné concernant la polymérisation pour obtenir des polymères amphotères : les exemples portent sur la copolymérisation en émulsion de l'acrylamide, du chlorure de méthylacrylamido propyltriméthyl ammonium (MAPTAC) et du diméthylaminopropyl acrylamide (DMAPA) quatemisée avec une chaîne alkyl comportant de 8 à 14 carbones.
- Le brevet WO 01/40318 qui protège un nouveau mode de synthèse en solution liquide de polymères hydrophobes pouvant être amphotères mais non exemplifiés.
- Le brevet EXXON US 4650848 qui décrit des terpolymères associatifs AMD/ AMD hydrophobes non chargés / bétaïne : l'aspect amphotère de ces polymères est introduit par un monomère zwitterionique comportant à lui seul les 2 charges en quantités exactement égales.

- Le brevet Calgon WO 01/06999 relatif à des polymères de bas poids moléculaire (inférieur à 10000 g.mol$^{-1}$) amphotères hydrophobes, dont les groupements apolaires sont portés par un monomère anionique et/ou non ionique. De par leur très faible poids moléculaire, ces polymères n'ont pas d'effet viscosifiant.
- Le document US 6,329,483 décrit des copolymères d'acide carboxylique et d'un monomère pouvant avoir une fonction ammonium quaternaire, et leur utilisation comme épaississant ou dispersant.
- Le document US 5,879,670 décrit des polymères ampholyte et leur utilisation dans des produits cosmétiques.

Toutefois, aucun des produits précédemment décrits n'a connu à ce jour de développement industriel de par les inconvénients qui leurs sont propres : manque de viscosité, de stabilité dans le temps, de stabilité à la température, et/ou de problèmes liés à leur préparation ou à leur mise en oeuvre.

## Description de l'invention

La demanderesse a trouvé et mis au point de nouveaux polymères acryliques amphotères associatifs, caractérisés en ce qu'ils présentent un poids moléculaire d'au moins 50000 g/mol, en pratique compris entre 50000 g/mol et 30.10$^6$ g/mol et en ce qu'ils comprennent :

- 0.01 à 5 mol % d' au moins un monomère cationique dérivé d'acrylamide portant une chaîne hydrophobe et de formule générale :

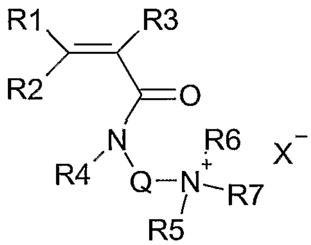

avec :

R1,R2,R3,R4,R5,R6 indépendamment un hydrogène ou une chaîne alkyle contenant de 1 à 4 carbones
Q : une chaîne alkyle comportant de 1 à 8 carbones
R7 : une chaîne alkyle ou aryl-alkyle comportant de 8 à 30 carbones
X: un halogénure choisi dans le groupe comprenant le bromure, chlorure, iodure, fluorure, ou un contre ion de charge négative.

- de 5 à 30 mol % d'au moins un monomère anionique. Les monomères anioniques utiles dans la présente invention peuvent être choisis dans un large groupe. Ces monomères peuvent présenter des fonctionnalités acryliques, vinyliques, maléiques, fumariques, allyliques et contenir un groupe carboxy, phosphonate, sulfonate, ou un autre groupe à charge anionique, ou bien le sel d'ammonium ou de métal alcalino terreux ou de métal alcalin correspondant d'un tel monomère. Des exemples de monomères convenables comprennent l'acide acrylique, l'acide méthacrylique, l'acide itaconique, l'acide crotonique, l'acide maléique, l'acide fumarique et les monomères de type acide fort présentant par exemple une fonction de type acide sulfonique ou acide phosphonique tels que l'acide 2-acrylamido-2-methylpropane sulfonique, l'acide vinylsulfonique, l'acide vinylphosphonique, l'acide allylsulfonique, l'acide allylphosphonique, l'acide styrène sulfonique et leurs sels solubles dans l'eau d'un métal alcalin, d'un métal alcalino terreux, et d'ammonium.

- et de 5 à 90 mol % d'au moins un monomère hydrosoluble non ionique. Les monomères non ioniques utiles selon l'invention peuvent être choisis dans le groupe comprenant les monomères vinyliques solubles dans l'eau. Des monomères préférés appartenant à cette classe sont avantageusement choisis dans le groupe comprenant l'acrylamide et le méthacrylamide, le N-isopropylacrylamide, le N-N-diméthylacrylamide et le N-méthylolacrylamide. Egalement, peuvent être utilisés la N-vinylformamide, le N-vinyl acetamide, la N-vinylpyridine et/ou la N-vinylpyrrolidone. Un monomère non ionique préféré sera l'acrylamide.

Il a été trouvé, de manière surprenante, qu'il est possible d'obtenir des polymères associatifs développant, à poids moléculaire égal et quelles que soient les conditions d'utilisation, un effet viscosifiant de composition aqueuse supérieur à celui de l'art antérieur, en utilisant un polymère amphotère selon l'invention, à base d'un ou d'un mélange

de monomères cationiques hydrophobes dérivés d'acrylamide, à base d'un ou d'un mélange de monomères anioniques et à base d'un ou d'un mélange de monomères hydrosolubles non-ioniques.

En plus de l'effet viscosifiant qui est amélioré, la sélection de ce type de polymère permet également d'obtenir des temps de mise en solution courts.

Les polymères de l'invention ne nécessitent pas de développement de procédé de polymérisation particulier. Ils peuvent être obtenus par toutes les techniques de polymérisation bien connues par l'homme de métier (polymérisation en solution, polymérisation en gel, polymérisation par précipitation, polymérisation en émulsion (aqueuse ou inverse) suivie ou non d'une étape de spray drying, polymérisation en suspension, polymérisation micellaire suivie ou non d'une étape de précipitation). L'invention concerne également les polymères amphotères associatifs précédemment décrits ramifiés ou/et réticulés. Les ramifiants (réticulants) utilisables sont le N-méthylol acrylamide, le méthylene bis acrylamide, les allyléthers de sucrose, les diacrylates, les divinyliques et tout autre composé multifonctionnel susceptible de ramifier. On pourra aussi utiliser un des ramifiants connus des composés diallylés tels que le chlorure de methyl triallyl ammonium, la triallylamine, le chlorure de tetraallyl ammonium, le tetra allyloxyéthane, le tetra allyl éthylène diamine, et plus généralement tous les composés polyallylés. Il est également possible de faire des polymères post réticulés comme par exemple par réaction d'amidation, d'esterification, de traitement aux rayons gamma... L'invention concerne également l'utilisation des polymères associatifs précédemment décrits ramifiés ou/et réticulés ou non, ainsi que les gels les contenant dans l'industrie du pétrole, du papier, du traitement de l'eau, l'industrie minière, des cosmétiques, du textile ou de la détergence.

Selon une forme avantageuse, les polymères associatifs contiennent de 0,01 à 5 mol % de monomères hydrophobes et de 5 à 30 mol% de monomère anionique et de 35 à 90 mol% de monomère non ionique. Préférentiellement, les polymères associatifs contiennent de 0,02 à 2 mol % de monomères hydrophobes et de 5 à 30 mol% de monomère anionique : acide acrylique, acide méthacrylique et/ou acide 2-acrylamido-2-methylpropane sulfonique et leurs sels, et de 48 à 90 mol% de monomère non ionique : acrylamide et/ou méthacrylamide et/ou N-isopropylacrylamide et/ou N-N-diméthylacrylamide et/ou N-vinylformamide et/ou N-vinyl acetamide et/ou N-vinylpyrrolidone..

Les monomères cationiques hydrophobes dérivés d'acrylamide préférés de l'invention sont le chlorure de N-acrylamidopropyl-N,N-diméthyl-N-dodécyl ammonium (DMAPA Cl(C12)), le chlorure de N-méthacrylamidopropyl-N,N-diméthyl-N-dodécyl ammonium (DMAPMA Cl(C12)), le bromure de N-acrylamidopropyl-N,N-diméthyl-N-dodécyl ammonium (DMAPA Br(C12)), le bromure de N-méthacrylamidopropyl-N,N-diméthyl-N-dodécyl ammonium (DMAPMA Br(C12)), le chlorure de N-acrylamidopropyl-N,N-diméthyl-N-octadécyl ammonium (DMAPA Cl(C18)), le chlorure de N-méthacrylamidopropyl-N,N-diméthyl-N-octadécyl ammonium (DMAPMA Cl(C18)), le bromure de N-acrylamidopropyl-N,N-diméthyl-N-octadécyl ammonium (DMAPA Br(C18)), le bromure de N-méthacrylamidopropyl-N,N-diméthyl-N-octadécyl ammonium (DMAPMA Br(C18)).

On notera que pour faciliter l'incorporation des monomères cationiques hydrophobes au cours de la polymérisation, il est connu de l'homme de l'art que l'on peut utiliser des tensioactifs ioniques ou non. Dans le cadre de l'invention, la quantité de tensioactif ajoutée reste cependant très inférieure aux quantités utilisées en polymérisation micellaire (qui sont de l'ordre de 20 moles et plus de tensioactif par mole de monomère hydrophobe).

De même l'utilisation de cosolvants de type, tert-butanol, isopropanol, butanol, hexanol, pentanol, glycérol...peut être envisagée pour aider à la solubilisation de ces monomères.

De plus, optionnellement et en association avec les monomères de l'invention précédemment décrits (cationique hydrophobe dérivé de l'acrylamide + anionique + non-ionique), un ou plusieurs autres monomères ioniques ou non, hydrosolubles ou non peuvent également être utilisés dans des proportions inférieures de préférence à 20 mol%. On pourra, par exemple, utiliser les monomères de type dialkylaminoalkyl (meth)acrylate, dialkylaminoalkyl (meth)acrylamide, diallylamine, methyldiallylamine et leurs sels d'ammonium quaternaire ou d'acides...les dérivés de l'acrylamide comme les N-alkylacrylamide par exemple le N-tert-butylacrylamide, l'octylacrylamide ainsi que les N,N-dialkylacrylamides comme le N,N-dihexylacrylamide...les dérivés d'acide acrylique comme les hydroxyalkyl acrylates et méthacrylates ou d'autres monomères ioniques ou non, hydrosolubles ou non, tels que par exemple les dérivés allyliques, le styrène, les esters d'acrylates pouvant comporter des chaînes éthoxylées ou non terminées par une chaîne alkyle ou arylalkyle...

De préférence, les polymères associatifs de l'invention se présentent sous une forme sèche, en poudre ou en billes et sont obtenus directement par polymérisation en gel, polymérisation par précipitation, polymérisation en suspension.

Selon une autre caractéristique, le poids moléculaire du polymère amphotère associatif est supérieur à 50000, avantageusement supérieur à 100 000 et de préférence supérieur à 200 000 g/mol. En pratique, les polymères sont utilisés à une concentration supérieure à 500 ppm, de préférence supérieure à 800 ppm et de préférence supérieure à 1 000 ppm.

L'invention concerne également une composition aqueuse contenant les polymères associatifs précédemment décrits utilisés comme agent viscosant.

## EXEMPLES

***Synthèse des monomères cationiques***

Les monomères cationiques hydrophobes dérivés d'acrylamide ou de méthacrylamide utilisés au cours des exemples ont été obtenus selon le schéma général de préparation bien connu de l'homme de métier et tel que décrit ci-après. Il s'agit en fait d'une réaction de quaternisation d'une molécule de N,N-diméthylaminopropyl(méth)acrylamide (DMAP(M)A) par un halogénure d'alkyle ou d'arylalkyle, obtenue en milieu solvant à 50°C. Le procédé général de synthèse est en particulier décrit dans l'exemple 1 du brevet US3948979 où l'on a remplacé l'acrylate de N,N-diméthylaminoéthyle par le N,N-diméthylaminopropylacrylamide (exemples A) ou par le N,N-diméthylaminopropylmethacrylamide (exemples M).

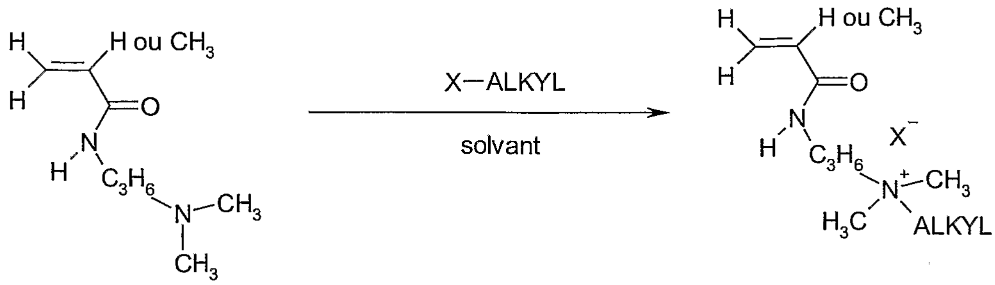


ALKYL : correpondant à une chaîne alkyle ou arylalkyle comportant de 8 à 30 carbones
X: un halogénure pouvant être bromure, chlorure, iodure, fluorure, ou n'importe quel contre ion de charge négative.

***Préparation du polymère par polymérisation en gel (exemples g: Ag ou Mg) :***

Dans un bêcher, on dissout x mol% de monomère cationique hydrophobe dérivé d'acrylamide, y mol% d'acide acrylique, z mol% d'acrylamide dans l'eau afin d'obtenir une teneur en matière active de 30%. Des additifs précédemment décrits peuvent avantageusement être additionnés à cet instant pour améliorer la solubilisation des monomères. La somme de x+y+z est égale à 100. La solution est alors agitée, refroidie et neutralisée par ajout de soude. La solution est alors introduite dans un dewar puis dégazée sous flux d'azote pour ôter l'oxygène.

La polymérisation est amorcée à l'aide d'un couple red/ox. La température augmente adiabatiquement.

Le gel obtenu est laissé 3 heures dans le dewar. Il est ensuite broyé puis séché une nuit à l'étuve. On obtient une poudre blanche qui est à nouveau broyée.

***Préparation du polymère par polymérisation par précipitation (exemples p : Ap ou Mp) :***

Le procédé utilisé est décrit dans l'exemple 3 du brevet de Rohm & Haas EP 63018 a été adapté à nos monomères.

Pour chacun des polymères obtenus, les masses molaires ont été déterminées par diffusion statique de la lumière.

## EXEMPLE 1 : effet viscosifiant des polymères de l'invention en fonction des conditions d'utilisation

Les poudres obtenues ont été solubilisées dans différentes saumures et la viscosité des solutions a été mesurée dans différentes conditions de cisaillement et de température. Les résultats sont donnés dans les tableaux 1, 2 et 3.

Sauf précisé, le contre ion du monomère cationique est un chlorure, x correspond au pourcentage molaire du ou des monomères cationiques hydrophobes, y correspond au pourcentage molaire du monomère anionique.

**Tableau 1** : mesure de viscosité des produits amphotères associatifs dans l'eau déionisée à 20°C.

| | R7 | x/y mol% | $M_w$ ($10^6$g.mol$^{-1}$) | C (ppm) | Viscosité (cps) à 7 s$^{-1}$ | Viscosité (cps) à 100 s$^{-1}$ |
|---|---|---|---|---|---|---|
| Ag1 | $C_{12}H_{25}$ | 0.7/27 | 6.4 | 10000 | 9780 | 685[a] |
| Ap2 | $C_{18}H_{37}$ | 5/20 | 0.2 | 40000 | 2350 | 660[a] |
| Ag3 | $C_{12}H_{25}$ | 1/27 | 2.5 | 5000 | 1040 | 205[a] |

**Tableau 2:** mesure de viscosité des produits amphotères associatifs dans différentes saumures à 24°C.

| | R7 | x/y mol% | $M_w$ ($10^6$g.mol$^{-1}$) | C (ppm) | Concentration en sels de la saumure (ppm) | Viscosité (cps) |
|---|---|---|---|---|---|---|
| Ag4 | $C_{18}H_{37}$ | 0.035/ 30 | 16.8 | 1000 | 58500 | 9.8[b] |
| Mg4 | $C_{18}H_{37}$ | 0.035/ 30 | 16.8 | 5000 | 5700 | 1350[c] |
| Ag5 | $C_{12}H_{25}$ | 0.4 / 25 | 6.4 | 1000 | 58500 | 5.6[b] |
| Ag6[m,r] | $C_{12}H_{25}$ | 0.4 / 25 | 6.4 | 5000 | 5700 | 3100[c] |
| Ag7 | $C_{12}H_{25}$ /$C_{18}H_{37}$ | (0.5 / 0.05) / 30 | 6.4 | 5000 | 5700 | 10000[c] |
| Ap8 | $C_{12}H_{25}$ | 5/20 | 0.2 | 40000 | 5700 | 165[a] |
| Ag9[n] | $C_{12}H_{25}$ | 0.4 / 27 | 2.5 | 5000 | 0 | 3000[c] |

**Tableau 3** : mesure de viscosité des produits amphotères associatifs à différentes températures

| | R7 | x/y mol% | $M_w$ ($10^6$ g.mol$^{-1}$) | C (ppm) | Concentration en sels de la saumure (ppm) | T (°C) | Viscosité (cps) |
|---|---|---|---|---|---|---|---|
| Mg4 | $C_{18}H_{37}$ | 0.035 / 30 | 16.8 | 1500 | 5700 | 70 | 70[d] |
| Ag10[o,r] | $C_{12}H_{25}$ | 0.6 / 25 | 6.4 | 2000 | 10800 | 65 | 300[a] |
| Ag11[p,r] | $C_{12}H_{25}$ | 0.6 / 27 | 6.4 | 1500 | 32800 | 70 | 80[d] |
| Ag12[q] | $C_{12}H_{25}$ | 0.4 / 20 | 6.4 | 5000 | 10800 | 50 | 3600[a] |
| Ag13[r] | $C_{12}H_{25}$ | 0.7 / 27 | 6.4 | 2000 | 10800 | 65 | 380[a] |

C: concentration du polymère dans la saumure en ppm.
a: la viscosité a été mesurée au Carry Med (type CSL 100) avec une géométrie cône-plan (diamètre = 6cm, angle =2°) à 7 $s^{-1}$ et 100 $s^{-1}$.
b: mesure effectuée avec un viscosimètre Brookfield type LVT à 60 tours par minute.
c: mesure effectuée avec un viscosimètre Brookfield type DV-II+ à 30 tours par minute.
d: la viscosité à été mesurée avec un viscosimètre Brookfield type LVT à 6 tours par minute.
m: polymère obtenu en présence d'un agent réticulant : 3 ppm de méthylene bis acrylamide (MBA).
n: polymère comportant 1 mol% de tert-octylacrylamide.
o polymère comportant 2 mol% de N-isopropylacrylamide.
p: polymère comportant 2 mol% d'acide 2-acrylamido-2-methylpropane sulfonique.
q: polymère comportant 2 mol% de N-vinylpyrrolidone.
r: le contre ion du monomère hydrophobe n'est pas un chlorure mais un bromure.

**EXEMPLE 2 : test de viscosité relative**

Afin de pouvoir comparer précisément l'efficacité (pouvoir viscosifiant) des produits de l'invention, divers polymères ont été préparés dans des conditions rigoureusement identiques : même mode opératoire (cf préparation du polymère) et mêmes compositions molaires, selon le tableau ci-après.

| | Monomère cationique | | | Monomère non ionique | Monomère anionique |
|---|---|---|---|---|---|
| | hydrophobe | | Non hydrophobe | Hydrophobe | Non hydrophobe |
| | Type acrylamido | Type allylique | | Type acrylate | |
| **Inv.** | OUI | | | | OUI |
| **xanio** | NON | NON | NON | NON | OUI |
| **xampho** | NON | NON | OUI | NON | OUI |
| **xHampho** | NON | NON | OUI | OUI | OUI |
| **xHLampho** | NON | OUI | NON | NON | OUI |
| **xHcatio** | OUI | NON | NON | NON | NON |

La viscosité des produits notés x (Vx) a été comparée à celle des polymères de l'invention (Vinv) dans différentes conditions (eau déionisée, saumure, à différentes concentrations et à différentes températures).

On notera le coefficient R, qui s'exprime en pourcentage, est défini par la relation suivante :

$$R = ((Vinv - Vx) / Vx) \times 100$$

Plus R est élevé, plus le pouvoir viscosfiant des polymères de l'invention différe de celui des polymères « standards » de l'industrie.

**Tableau 4:** mesure du coefficient R par rapport à un polymère obtenu par polymérisation en gel et contenant 0,035 mol% de monomère cationique et 30 mol% de monomère anionique (le polymère qui sert de référence est le **Ag4**).

Mesures de viscosité effectuées à 5000 ppm de polymère au Carry Med à $7s^{-1}$ à 20°C. La saumure à 5700 ppm de sels comporte 108 ppm d'ions divalents (chlorure de calcium et chlorure de magnésium).

| Produits | Eau déionisée 20°C | Saumure à 5700 ppm 20°C | Eau déionisée 70°C |
|---|---|---|---|
| xanio | + 64% | + 249% | + 22% |
| xampho | + 61% | + 254% | + 25% |
| xHampho | + 8% | + 7% | + 130% |
| xHLampho | +21% | + 132% | + 19% |
| xHcatio | + 2000% | insoluble | + 3800% |

**Tableau 5:** mesure du coefficient R par rapport à un polymère obtenu par polymérisation en gel et contenant 0,6 mol% de monomère cationique et 27 mol% de monomère anionique (le polymère de l'invention qui sert de référence est le **Ag11**).

Mesures de viscosité effectuées à 1500 ppm de polymère au Carry Med à $7s^{-1}$. La saumure à 32800 ppm de sels comporte 1040 ppm d'ions divalents (chlorure de calcium et chlorure de magnésium).

| Produits | Eau déionisée 20°C | Saumure à 32800 ppm 20°C | Eau déionisée 70°C |
|---|---|---|---|
| xanio | + 41% | + 135% | + 800% |
| xampho | + 38% | + 130% | + 750% |
| xHampho | + 11% | + 31% | + 208% |
| xHLampho | + 100% | insoluble | + 140% |
| xHcatio | + 400% | + 82% | + 230% |

**Tableau 6:** mesure du coefficient R par rapport à un polymère obtenu par polymérisation par précipitation et contenant 5 mol% de monomère cationique et 20 mol% de monomère anionique (le polymère de l'invention qui sert de référence est le **Ap8**).

Mesures de viscosité effectuées à 40000 ppm de polymère au Carry Med à $7s^{-1}$. La saumure à 5700 ppm de sels comporte 108 ppm d'ions divalents (chlorure de calcium et chlorure de magnésium).

| Produits | Eau déionisée 20°C | Saumure à 5700 ppm 20°C | Eau déionisée 70°C |
|---|---|---|---|
| xanio | + 1100% | + 1150% | + 1570% |
| xampho | + 1000% | + 1130% | + 1500% |
| xHampho | + 163% | + 790% | + 4400% |
| xHLampho | + 28% | + 30% | + 20% |
| xHcatio | + 20% | + 50% | + 40% |

**CONCLUSION (tableaux 1 à 6)**

On remarque que le fait d'utiliser, selon l'invention, un polymère amphotère à base d'un monomère cationique hydrophobe dérivé de l'acrylamide ou du méthacrylamide, permet d'accroître la viscosité des solutions d'eau déionisée mais aussi celle des solutions salées.

Cet effet d'accroissement de viscosité peut être obtenu même avec des polymères comportant très peu de monomère cationique hydrophobe et même à des concentrations de polymère faibles (<1000 ppm).

Le gain de viscosité peut également être observé à différentes températures, à différents taux de cisaillement et avec différentes méthodes de mesure.

De plus, les nouveaux polymères associatifs amphotères de l'invention montrent, dans des conditions identiques de poids moléculaire et de composition molaire (anionicité et/ou cationicité), un niveau de performance (gain de viscosité) très significativement supérieur à celui obtenu par les polymères « standards » (tableaux 4 à 6).

De par leurs propriétés physiques, les polymères de l'invention sont des ingrédients intéressants pour viscosifier toute composition à base d'eau.

L'invention couvre également tous les modes de réalisation et toutes les applications qui seront directement accessibles à l'homme de métier à la lecture de la présente demande, de ses connaissances propres, et éventuellement d'essais simples de routine.

**Revendications**

1. Polymère amphotère associatif **caractérisé en ce qu'**il présente un poids moléculaire supérieur à 50000 g/mol et **en ce qu'**il est constitué de :

   - 0,01 à 5 mol% d'au moins un monomère cationique dérivé d'acrylamide portant une chaîne hydrophobe et de formule générale :

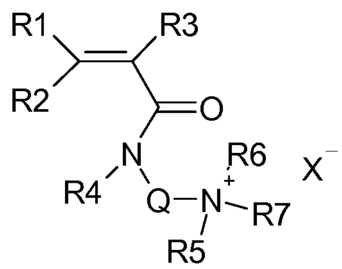

   avec

   R1, R2, R3, R4, R5, R6 indépendamment un hydrogène ou une chaîne alkyle contenant de 1 à 4 carbones
   Q: une chaîne alkyle comportant de 1 à 8 carbones
   R7: une chaîne alkyle ou aryl-alkyle comportant de 8 à 30 carbones, de préférence de 8 à 20 carbones

X: un halogénure choisi dans le groupe comprenant le bromure, chlorure, iodure, fluorure, un contre ion de charge négative.

- de 5 à 30 mol % d'au moins un monomère anionique présentant des fonctionnalités acryliques, vinyliques, maléiques, fumariques, allyliques et contenant un groupe carboxy, phosphonate ou sulfonate et/ou leurs sels d'ammonium ou de métal alcalino terreux ou de métal alcalin
- et de 5 à 90 mol % d'au moins un monomère, hydrosoluble non ionique.

2. Polymère amphotère associatif selon la revendication 1 **caractérisé en ce que** le monomère anionique est choisi dans le groupe comprenant l'acide acrylique, l'acide méthacrylique, l'acide itaconique, l'acide crotonique, l'acide maléique, l'acide fumarique, l'acide 2-acrylamido-2-methylpropane sulfonique, l'acide vinylsulfonique, l'acide vinylphosphonique, l'acide allylsulfonique, l'acide allylphosphonique et/ou leurs sels solubles dans l'eau d'un métal alcalin, d'un métal alcalino terreux, et d'ammonium.

3. Polymère amphotère associatif selon l'une quelconque des revendications 1 ou 2 **caractérisé en ce que** le monomère hydrosoluble non ionique est choisi dans le groupe comprenant les monomères vinyliques solubles dans l'eau, lesquels sont avantageusement choisis dans le groupe comprenant l'acrylamide et le méthacrylamide, le N-isopropylacrylamide, le N-N-diméthylacrylamide et le N-méthylolacrylamide, la N-vinylformamide, le N-vinyl acetamide, la N-vinylpyridine et/ou la N-vinylpyrrolidone.

4. Polymère amphotère associatif selon l'une quelconque des revendications 1 à 3 **caractérisé en ce que** ledit polymère est ramifié et/ou réticulé à l'aide d'un agent ramifiant et/ou réticulant.

5. Polymère amphotère associatif selon la revendication 4 **caractérisé en ce que** l'agent ramifiant et/ou réticulant est choisi dans le groupe comprenant le N-méthylol acrylamide, le méthylene bis acrylamide, les allyléthers de sucrose, les diacrylates, les divinyliques, les composés diallylés tels que le chlorure de methyl triallyl ammonium, la triallylamine, le chlorure de tetraallyl ammonium, le tetra allyloxyéthane, le tetra allyl éthylène diamine.

6. Polymère amphotère associatif selon l'une quelconque des revendications 1 à 5 **caractérisé en ce qu'**il se présente sous une forme sèche, en poudre ou en billes.

7. Polymère amphotère associatif selon l'une quelconque des revendications 1 à 6 **caractérisé en ce qu'**il est constitué de

- 0,01 à 5 mol% de monomère cationique hydrophobe, de préférence de 0,02 à 2 mol%
- de 5 à 30 mol% d'acide acrylique et/ou méthacrylique, et/ou acide 2-acrylamido-2-méthylpropane sulfonique et leur sel,
- et de 35 à 90 mol% d'acrylamide et/ou de méthacrylamide et/ou de N-isopropylacrylamide et/ou de N-N-diméthylacrylamide et/ou de N-vinylformamide et/ou de N-vinyl acetamide et/ou de N-vinylpyrrolidone, de préférence de 48 à 90 mol%.

8. Polymère amphotère associatif selon l'une quelconque des revendications 1 à 7 **caractérisé en ce que** le monomère cationique hydrophobe dérivés d'acrylamide est choisi dans le groupe comprenant le chlorure de N-acrylamidopropyl-N,N-diméthyl-N-dodécyl ammonium, le chlorure de N-méthacrylamidopropyl-N,N-diméthyl-N-dodécyl ammonium, le bromure de N-acrylamidopropyl-N,N-diméthyl-N-dodécyl ammonium, le bromure de N-méthacrylamidopropyl-N,N-diméthyl-N-dodécyl ammonium, le chlorure de N-acrylamidopropyl-N,N-diméthyl-N-octadécyl ammonium, le chlorure de N-méthacrylamidopropyl-N,N-diméthyl-N-octadécyl ammonium, le bromure de N-acrylamidopropyl-N,N-diméthyl-N-octadécyl ammonium, le bromure de N-méthacrylamidopropyl-N,N-diméthyl-N-octadécyl ammonium.

9. Polymère amphotère associatif selon l'une quelconque des revendications 1 à 8 **caractérisé en ce qu'**il a un poids moléculaire supérieur à 100000 g/mol et de préférence supérieur à 200000 g/mol.

10. Composition aqueuse comprenant comme agent viscosifiant, au moins un polymère selon l'une quelconque des revendications 1 à 9.

11. Utilisation des polymères associatifs selon l'une des revendications 1 à 9, ramifiés ou/et réticulés ou non, ainsi que les gels les contenant dans l'industrie du pétrole, du papier, du traitement de l'eau, de l'industrie minière, des

cosmétiques, du textile ou de la détergence.

## Patentansprüche

1. Assoziatives amphoteres Polymer, **dadurch gekennzeichnet, dass** es ein Molekulargewicht von mehr als 50.000 g/Mol aufweist und aus Folgendem gebildet ist:

   - 0,01 bis 5 Mol-% mindestens eines von Acrylamid abgeleiteten kationischen Monomers, das eine hydrophobe Kette enthält und die folgende allgemeine Formel aufweist:

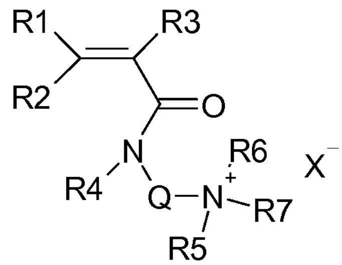

   worin

   R1, R2, R3, R4, R5, R6 unabhängig voneinander für einen Wasserstoff oder eine Alkylkette, enthaltend 1 bis 4 Kohlenstoffe, stehen
   Q: eine Alkylkette, enthaltend 1 bis 8 Kohlenstoffe
   R7: eine Alkyl- oder Arylalkylkette, enthaltend 8 bis 30 Kohlenstoffe, vorzugsweise 8 bis 20 Kohlenstoffe
   X: ein Halogenid, ausgewählt aus der Gruppe, umfassend Bromid, Chlorid, Iodid, Fluorid oder ein Gegenion mit negativer Ladung.

   - zwischen 5 und 30 Mol-% mindestens eines anionischen Monomers, das Acryl-, Vinyl-, Malein-, Fumar-, Allylfunktionalitäten aufweist und eine Carboxy-, Phosphonat- oder Sulfonatgruppe und/oder deren Ammonium- oder Erdalkalimetall- oder Alkalimetallsalze enthält
   - und zwischen 5 und 90 Mol% mindestens eines nichtionischen wasserlöslichen Monomers.

2. Assoziatives amphoteres Polymer, wie in Anspruch 1 beansprucht, **dadurch gekennzeichnet, dass** das anionische Monomer ausgewählt ist aus der Gruppe, die Acrylsäure, Methacrylsäure, Itaconsäure, Crotonsäure, Maleinsäure, Fumarsäure, 2-Acrylamido-2-methylpropansulfonsäure, Vinylsulfonsäure, Vinylphosphonsäure, Allylsulfonsäure, Allylphosphonsäure und/oder deren wasserlösliche Salze von Alkalimetall, Erdalkalimetall und Ammonium umfasst.

3. Assoziatives amphoteres Polymer, wie in Anspruch 1 oder 2 beansprucht, **dadurch gekennzeichnet, dass** das nichtionische wasserlösliche Monomer ausgewählt ist aus der Gruppe, die wasserlösliche Vinylmonomere umfasst, die vorteilhafterweise ausgewählt sind aus der Gruppe, die Acrylamid und Methacrylamid, N-Isopropylacrylamid, N-N-Dimethylacrylamid und N-Methylolacrylamid, N-Vinylformamid, N-Vinylacetamid, N-Vinylpyridin und/oder N-Vinylpyrrolidon umfasst.

4. Assoziatives amphoteres Polymer, wie in einem der Ansprüche 1 bis 3 beansprucht, **dadurch gekennzeichnet, dass** das Polymer mittels eines Verzweigungs- und/oder Vernetzungsmittels verzweigt und/oder vernetzt ist.

5. Assoziatives amphoteres Polymer, wie in Anspruch 4 beansprucht, **dadurch gekennzeichnet, dass** das Verzweigungs- und/oder Vernetzungsmittel ausgewählt ist aus der Gruppe, die N-Methylolacrylamid, Methylenbisacrylamid, Allylether von Saccharose, Diacrylate, Divinyle, diallylierte Verbindungen wie etwa Methyltriallylammoniumchlorid, Triallylamin, Tetraallylammoniumchlorid, Tetraallyloxyethan und Tetraallylethylendiamin umfasst.

6. Assoziatives amphoteres Polymer, wie in einem der Ansprüche 1 bis 5 beansprucht, **dadurch gekennzeichnet, dass** es in Trocken-, Pulver- oder Granulatform vorliegt.

7. Assoziatives amphoteres Polymer, wie in einem der Ansprüche 1 bis 6 beansprucht, **dadurch gekennzeichnet,**

**dass** es aus Folgendem gebildet ist:

- 0,01 bis 5 Mol-% eines hydrophoben kationischen Monomers, vorzugsweise 0,02 bis 2 Mol-%
- zwischen 5 und 30 Mol-% Acrylsäure und/oder Methacrylsäure und/oder 2-Acrylamido-2-methylpropansulfonsäure und deren Salze,
- 35 bis 90 Mol-% Acrylamid und/oder Methacrylamid und/oder N-Isopropylacrylamid und/oder N-N-Dimethylacrylamid und/oder N-Vinylformamid und/oder N-Vinylacetamid und/oder N-Vinylpyrrolidon, vorzugsweise 48 bis 90 Mol-%.

**8.** Assoziatives amphoteres Polymer, wie in einem der Ansprüche 1 bis 7 beansprucht, **dadurch gekennzeichnet, dass** das von Acrylamid abgeleitete hydrophobe kationische Monomer ausgewählt ist aus der Gruppe, die N-Acrylamidopropyl-N,N-dimethyl-N-dodecylammoniumchlorid, N-Methacrylamidopropyl-N,N-dimethyl-N-dodecylammoniumchlorid, N-Acrylamidopropyl-N,N-dimethyl-N-dodecylammoniumbromid, N-Methacrylamidopropyl-N,N-dimethyl-N-dodecylammoniumbromid, N-Acrylamidopropyl-N,N-dimethyl-N-octadecylammoniumchlorid, N-Methacrylamidopropyl-N,N-dimethyl-N-octadecylammoniumchlorid, N-Acrylamidopropyl-N,N-dimethyl-N-octadecylammoniumbromid und N-Methacrylamidopropyl-N,N-dimethyl-N-octadecylammoniumbromid umfasst.

**9.** Assoziatives amphoteres Polymer, wie in einem der Ansprüche 1 bis 8 beansprucht, **dadurch gekennzeichnet, dass** es ein Molekulargewicht von mehr als 100.000 g/Mol und vorzugsweise mehr als 200.000 g/Mol aufweist.

**10.** Wässrige Zusammensetzung, die als Verdickungsmittel mindestens ein Polymer, wie in einem der Ansprüche 1 bis 9 beansprucht, enthält.

**11.** Verwendung von assoziativen Polymeren, wie in einem der Ansprüche 1 bis 9 beansprucht, die verzweigt und/oder vernetzt sind oder auch nicht, sowie der Gele, die diese enthalten, in der Öl-, Papier-, Wasseraufbereitungs-, Bergbau-, Kosmetik-, Textil- oder Reinigungsmittelindustrie.

## Claims

**1.** Associative amphoteric polymer **characterised in that** it presents a molecular weight greater than 50 000 g/mol and **in that** it is constituted of:

- 0.01 to 5 mol% of at least one acrylamide-derived cationic monomer containing a hydrophobic chain and with the general formula:

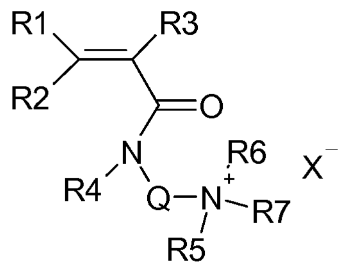

wherein

R1, R2, R3, R4, R5, R6, independently, a hydrogen or an alkyl chain containing 1 to 4 carbons
Q: an alkyl chain containing 1 to 8 carbons
R7: an alkyl or arylalkyl chain containing 8 to 30 carbons, preferably 8 to 20 carbons
X: a halide selected from the group including bromide, chloride, iodide, fluoride and a counterion with a negative charge.

- between 5 and 30 mole % of at least one anionic monomer presenting acrylic, vinyl, maleic, fumaric, allylic functionalities and containing a carboxy, phosphonate or sulfonate group and/or their ammonium or alkaline-earth metal or alkali metal salts
- and between 5 and 90 mol % of at least one non-ionic hydrosoluble monomer.

2. Associative amphoteric polymer as claimed in claim 1 **characterised in that** the anionic monomer is selected from the group including acrylic acid, methacrylic acid, itaconic acid, crotonic acid, maleic acid, fumaric acid, 2-acrylamido-2-methylpropane sulfonic acid, vinylsulfonic acid, vinylphosphonic acid, allylsulfonic acid, allylphosphonic acid and/or their water-soluble salts of an alkali metal, alkaline-earth metal and ammonium.

3. Associative amphoteric polymer as claimed in either claim 1 or 2 **characterised in that** the non-ionic hydrosoluble monomer is selected from the group including water-soluble vinyl monomers, which are advantageously selected from the group including acrylamide and methacrylamide, N-isopropylacrylamide, N-N-dimethylacrylamide and N-methylolacrylamide. N-vinylformamide, N-vinyl acetamide, N-vinylpyridine and/or N-vinylpyrrolidone.

4. Associative amphoteric polymer as claimed in any of claims 1 to 3 **characterised in that** said polymer is branched and/or cross-linked using a branching and/or cross-linking agent.

5. Associative amphoteric polymer as claimed in claim 4 **characterised in that** the branching and/or cross-linking agent is selected from the group including N-methylol acrylamide, methylene bis acrylamide, allyl ethers of sucrose, diacrylates, divinyls, diallylated compounds such as methyl triallyl ammonium chloride, triallylamine, tetraallyl ammonium chloride, tetra allyl oxyethane and tetra allyl ethylene diamine.

6. Associative amphoteric polymer as claimed in any of claims 1 to 5 **characterised in that** it comes in dry, powder or granulate form.

7. Associative amphoteric polymer as claimed in any of claims 1 to 6 **characterised in that** it is constituted of:

- 0.01 to 5 mol % of a hydrophobic cationic monomer, preferably from 0.02 to 2 mol %
- between 5 and 30 mole % of acrylic acid and/or methacrylic acid and/or 2-acrylamido-2-methylpropane sulfonic acid and their salts,
- and from 35 to 90 mole % of acrylamide and/or methacrylamide and/or N-isopropylacrylamide and/or N-N-dimethylacrylamide and/or N-vinylformamide and/or N-vinyl acetamide and/or N-vinylpyrrolidone, preferably from 48 to 90 mol %.

8. Associative amphoteric polymer as claimed in any of claims 1 to 7 **characterised in that** the acrylamide-derived hydrophobic cationic monomer is selected from the group including N-acrylamidopropyl-N,N-dimethyl-N-dodecyl ammonium chloride, N-methacrylamidopropyl-N,N-dimethyl-N-dodecyl ammonium chloride, N-acrylamidopropyl-N,N-dimethyl-N-dodecyl ammonium bromide, N-methacrylamidopropyl-N,N-dimethyl-N-dodecyl ammonium bromide, N-acrylamidopropyl-N,N-dimethyl-N-octadecyl ammonium chloride, N-methacrylamidopropyl-N,N-dimethyl-N-octadecyl ammonium chloride, N-acrylamidopropyl-N,N-dimethyl-N-octadecyl ammonium bromide and N-methacrylamidopropyl-N,N-dimethyl-N-octadecyl ammonium bromide.

9. Associative amphoteric polymer as claimed in any of claims 1 to 8 **characterised in that** it has a molecular weight greater than 100 000 g/mol and preferably greater than 200 000 g/mol.

10. Aqueous composition containing as a thickening agent at least one polymer as claimed in any of claims 1 to 9.

11. Use of associative polymers as claimed in any of claims 1 to 9, branched and/or cross-linked or not, as well as the gels containing them in the oil, paper, water treatment, mining, cosmetics, textile or detergence industries.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5071934 A
- WO 0140318 A
- US 4650848 A, EXXON
- WO 0106999 A, Calgon
- US 6329483 B
- US 5879670 A
- US 3948979 A
- EP 63018 A, Rohm & Haas